# EUROPEAN PATENT APPLICATION

(11) **EP 2 306 294 A1**
(43) Date of publication of application: **06.04.2011**
(21) Application number: 08787601.7
(22) Date of filing: 10.06.2008
(51) Int. Cl.: G06F 3/06, G06F 17/30

(54) **METHOD FOR ACCESSING A STORAGE SYSTEM WITH NUMEROUS FILE SYSTEMS**

(71) Applicant: Microelectronica Española, S.A.U., 28002 Madrid (ES)
(72) Inventor: CAÑIS ROBLES, Javier, E-28522 Madrid (ES); CORTES SAINZ, Javier, E-28031 Madrid (ES); AHMET, Altay, California 94040-3310 (US)
(74) Representative: Carpintero Lopez, Francisco
(86) International application number: PCT/ES2008/000420
(87) International publication number: WO 2009/150259

(57) **Abstract**

To avoid data collisions and conflicts when accessing a storage system with host and embedded file systems, file access commands may be received from the host and embedded file systems and translated to memory access commands. The memory access commands may write and read data with a memory on the storage system. Translating and executing the memory access commands centrally on the storage system preserves the integrity of the data in the memory. The embedded file system may receive the file access commands using the Universal Serial Bus Mass Storage Class interface from the host. Alternatively, a storage system index in the storage system includes a lock flag that indicates that portions of the memory are being accessed by the host and embedded file systems. The storage system index and copies of the storage system index may include modification flags to indicate whether the copies on the host and the storage system have been modified and need to be synchronized.

## Description

### TECHNICAL FIELD

This application relates to the operation of non-volatile flash memory systems, and, more specifically, to a method for accessing a storage system with multiple file systems.

### BACKGROUND

There are many commercially successful non-volatile memory products being used today, particularly in the form of small form factor cards, which employ flash EEPROM (Electrically Erasable and Programmable Read Only Memory) cells formed on one or more integrated circuit devices. Some of the commercially available card formats include CompactFlash (CF) cards, MultiMedia cards (MMC), and Secure Digital (SD) cards. Other commercially available card formats include Smart Cards, Subscriber Identity Module (SIM), and Removable User Identity Module (R-UIM) cards. Hosts include personal computers, notebook computers, personal digital assistants (PDAs), various data communication devices, digital cameras, cellular telephones, portable audio players, automobile sound systems, and similar types of equipment. In some systems, a removable card includes a controller to direct operation of the memory in the card. Thus, control of the memory may be achieved by software, firmware, hardware, or any combination thereof on a controller in the card. Besides a memory card implementation, this type of memory can alternatively be embedded into various types of host systems. In both removable and embedded applications, host data may be stored in the memory according to a storage scheme implemented by memory control software.

The memory control software may interface with a host file system, which, in turn, may interface with a memory file manager which provides an application programming interface (API) to applications accessing the memory. Host file systems may support a set of read and write commands to access storage systems connected to the host, may be optimized for the resource limitations or features of the host, and may include advanced features such as multi-thread support.

Some non-volatile memory cards contain an embedded processor that may provide data to store within the memory in the card. The embedded processor and the host may access and retrieve such data. Similarly, the host may provide data for storage within the memory in the card and the host, and the embedded processor may access and retrieve such data. In these situations, the embedded processor shares the memory with the host, and utilizes a separate, additional file system, interfaced with the memory control software, to manage its data storage and retrieval.

### SUMMARY

In order to control shared access to a memory within a non-volatile memory card when a host file system and an embedded processor file system are both operated in parallel, various methods for accessing a storage system with multiple file systems can be provided to effect synchronization between the host and memory card file systems.

One example is a method for managing access to a memory in a storage system. An embedded file access request from within the storage system is converted to an embedded file access command. A host file access command is received from a host. The embedded file access command and the host file access command are translated to memory access commands for writing and reading data in the memory. The embedded file access request may be received from an embedded application executing on the storage system. The host file access command may be received over a Universal Serial Bus interface, and may be included in a command conforming to a Universal Serial Bus Mass Storage Class interface. The memory access commands may be executed, and the translating and executing steps may be performed on the storage system. The data written by the memory access commands may be in a common file.

Another example is a method is disclosed for managing access to a memory indexed by a storage system index in a storage system. The method includes receiving an embedded file access request from within the storage system and determining whether a lock flag is set for a portion of the memory corresponding to the embedded file access request, where the lock flag is included in the storage system index and is set only when the portion of the memory is locked. If the lock flag is not set for the portion of the memory corresponding to the embedded file access request, the method further includes setting the lock flag for the portion of the memory, and converting the embedded file access request to an embedded memory access command. The method also includes executing the embedded memory access command to write and read data in the memory, and clearing the lock flag for the portion of the memory corresponding to the embedded file access request. If the lock flag is set for the portion of the memory corresponding to the embedded file access request, the method includes preventing the embedded file access request from executing. The embedded file access request may be received from an embedded application executing on the storage system. The portion of the memory that is locked may include data corresponding to one or more of a file, a directory, or all of the memory.

The method may also include receiving an inquiry from a host to determine a status of the lock flag for the portion of the memory corresponding to a host file access request. The status of the lock flag for the portion of the memory may be transmitted to the host. If the lock flag is not set for the portion of the memory corresponding to the host file access request, the method may further include receiving a host memory access command that is based on the host file access request, and setting the lock flag for the portion of the memory. The host memory access command may be executed to write and read data in the memory, and the lock may be cleared for the portion of the memory corresponding to the host file access request. If the lock flag is set for the portion of the memory corresponding to the host file access request, then the method includes preventing the host file access request from executing.

A further example is a method for managing access to a memory indexed by a storage system index in a storage system, including receiving an embedded file access request from within the storage system, where the embedded file access request is a write file request; transmitting a query to determine a status of a host modification flag, where the host modification flag is set to indicate the host copy has been modified; and receiving the status of the host modification flag. If the host modification flag is set, the method includes clearing the host modification flag, copying the host copy to an embedded copy of the storage system index, and copying the host copy to the storage system index. The host copy is stored on the host, and the embedded copy is stored on the storage system. The method further includes converting the embedded file access request to an embedded memory access command and executing the embedded memory access command to write data to the memory. If the embedded memory access command increases a size of a file associated with the embedded file access request, the method includes updating the embedded copy with the increased size of the file and setting an embedded modification flag to indicate the embedded copy has been modified.

The method may also include receiving an inquiry from a host to determine a status of the embedded modification flag, and transmitting to the host the status of the embedded modification flag. If the embedded modification flag is set, the method may include clearing the embedded modification flag, copying the embedded copy to the host copy, and copying the embedded copy to the storage system index. A host memory access command may be received and executed to write data to the memory corresponding to a host file access request. If the host memory access command increases a size of a file associated with the host file access request, the method includes updating the host copy with the increased size of the file and setting a host modification flag in the host copy to indicate the host copy has been modified.

In other examples, a system including a processor may be configured to execute program instructions for carrying out the above-described methods. Other methods and systems, and features and advantages thereof will be, or will become, apparent to one with skill in the art upon examination of the following figures and detailed description. It is intended that the scope of the invention will include the foregoing and all such additional methods and systems, and features and advantages thereof.

### BRIEF DESCRIPTION OF THE DRAWINGS

The components in the figures are not necessarily to scale, emphasis instead being placed upon illustrating various aspects thereof. Moreover, in the figures, like referenced numerals designate corresponding parts throughout the different views.
Figure 1 is a block diagram of a first exemplary system including a host in communication with a memory system having non-volatile memory.
Figure 2 is a flow diagram illustrating a method of managing access to a memory in a storage system.
Figure 3 is a block diagram of a second exemplary system including a host in communication with a memory system having non-volatile memory.
Figure 4 is a flow diagram illustrating a method of managing access to a memory indexed by a storage system index in a storage system.
Figure 5 is a flow diagram illustrating a method of executing memory access commands.

### DETAILED DESCRIPTION OF THE PRESENTLY PREFERRED EMBODIMENTS

Applications in an exemplary system may need to write data to a storage system, and read data from a storage system. In many cases, a host file system on a host provides the necessary Application Programming Interface (API) to perform all of the required operations, such as opening a file, reading file data, writing file data, and closing a file. One example of a file system API is the Win32 File I/O API, provided by Microsoft Corporation. The Win32 API supports a variety of read and write functions for reading and writing a file on a storage system.

Some storage systems, such as removable non-volatile memory cards, contain an embedded processor. The embedded processor may perform a variety of operations, such as performing calculations or executing software programs or subroutines in response to requests from the host in communication with the storage system. The embedded processor may also execute subroutines, or programs without any request from or control by the host. One example of such a program is a subroutine to maintain the data stored in a non-volatile memory.

The applications running on an embedded processor may also generate data that may be stored within the non-volatile memory card, and may access data stored in a non-volatile memory card. These applications may access this storage through a file system running within the embedded processor's operating system.

In some systems, the data storage space accessible by applications running on the embedded processor is logically or physically separate from the data storage space accessible by the host. A physically separate data storage space may require the implementation of two or more physical memory arrays within the storage system. A logically separate data storage space may utilize two or more data partitions within a common memory. In these systems, the host file system and the embedded processor file system operate independently of each other, and coordination between the two file systems may not be required.

However, for some applications, it may be desirable for the host and the embedded processor to share access to the same data. In this situation, the shared data is stored on the same physical memory or same logical partition within the storage system. Host applications or embedded processor applications may read, write, and modify shared data. Therefore, in such a system, two file systems, a host file system and an embedded file system, may provide access to the same data space.

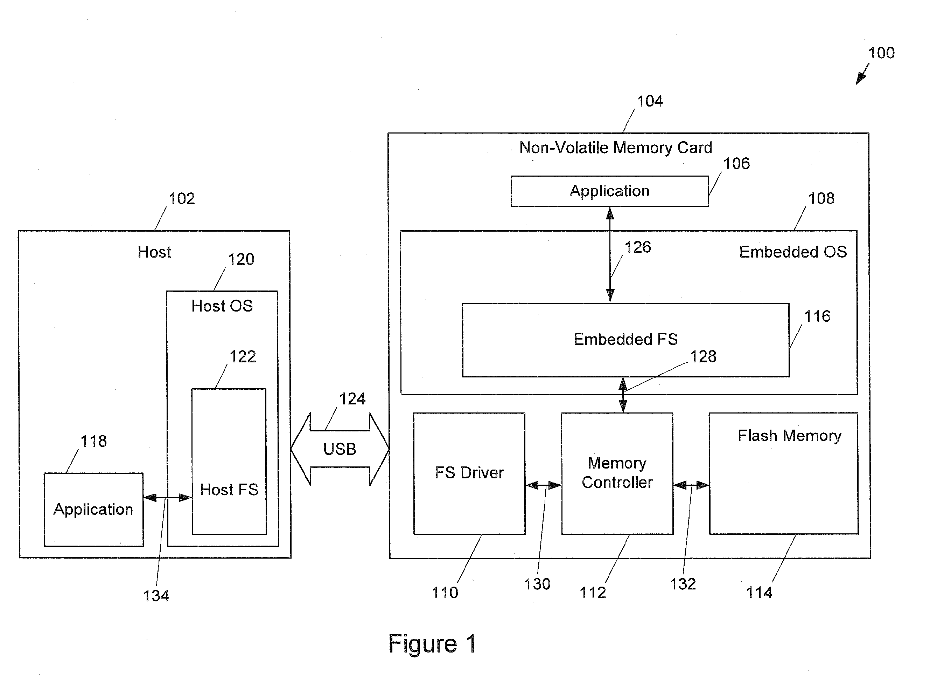

Figure 1 is a block diagram of a first exemplary system 100 including a host 102 in communication with a storage system 104. The storage system 104 may be a MegaSlM Universal Integrated Circuit Card, for example. A flash memory 114 in the storage system 104 may be accessed by embedded applications 106 on executing on the storage system 104 or host applications 118 executing on the host 102. The host file system 122 and the embedded file system 116 may each read and write data to the memory 114 in the storage system 104. For example, a host file system 122 may write and read its own data, and an embedded file system 116 may also write and read its own data. Commands from the host file system 122 and commands from the embedded file system 116 are not mutually exclusive and may occur independently and in parallel, or may occur at separate times. The memory 114 may also store shared data that may be accessed by both the host file system 122 and the embedded file system 116. For example, the host file system 122 may write data that is readable by the embedded file system 116, and the embedded file system 116 may also overwrite and modify that data. Similarly, the embedded file system 116 may write data that is readable by the host file system 122, and the host file system 122 may also overwrite and modify the data.

A memory controller 112 may receive file-level commands from the host file system 122 and the embedded file system 116. The file-level commands may be translated by the memory controller 112 to memory-level commands for writing and reading data in the memory 114. Data corruption and collision is avoided in this architecture because the memory controller 112 is a centralized location for managing the file system in the memory 114. The host file system 122 and the embedded file system 116 cannot simultaneously access the same locations in the memory 114 because the memory controller 112 controls access to the memory 114.

The storage system 104 may include one or a plurality of embedded applications 106 executing on the storage system 104, an embedded operating system 108, a file system driver 110, the memory controller 112, and the flash memory 114. The flash memory 114 includes data that is stored in the storage system 104. The flash memory 114 may be organized by a file allocation table (FAT), for example, or may be organized using other formats. The embedded operating system 108 includes an embedded file system 116. The applications 106 may write and read data in the memory 114 by sending a file access request 126 to the embedded file system 116. The file access requests 126 may be in the form of function calls to functions supported by the application programming interface (API) of the embedded file system 116, for example. The embedded file system 116 may convert the file access requests 126 to file access commands 128 that are sent to the memory controller 112 to access the memory 114. The file access commands 128 may include file-level commands, such as open file, write file, and read file.

The host 102 may include one or a plurality of host applications 118 executing on the host 102, and a host operating system 120. A host file system 122 included in the host operating system 120 may receive file access requests 134 from the host applications 118. The host applications 118 may write and read data to the memory 114 through the file access requests 134. The file access requests 134 may be in the form of function calls to functions supported by the application programming interface (API) of the host file system 122, for example. The host file system 122 may convert the file access requests 134 to file access commands 130.

A Universal Serial Bus (USB) interface 124 may be used to transmit the file access commands 130 from the host file system 122 to the file system driver 110 on the storage system 104. Other types of interfaces between the host 102 and the storage system 104 may also be used to communicate the file access commands 130. The USB interface 124 may include a USB Mass Storage Class (MSC) interface for transmitting the file access commands 130 from the host 102 to the storage system 104. The USB MSC interface may include memory-level commands, such as read sector and write sector commands. The USB interface 124 with the USB MSC interface may also include file-level file access commands in a special sector of the memory-level commands. For example, the file access commands 130 may be included as a special cluster in a sector command of the USB MSC interface. The host 102 and the storage system 104 may exchange commands and data using the USB MSC, USB Ethernet Emulation Model (EEM), or USB integrated circuit card device (ICCD) protocols, or any combination thereof. A proprietary USB class interface may also be used to exchange commands and data.

The memory controller 112 on the storage system 104 may receive file access commands 128 and 130 from the embedded file system 116 and the file system driver 110. As described previously, the file access commands 130 from the file system driver 110 may originate from host applications 118 via the host file system 122 and USB interface 124. The memory controller 112 may translate the received file access commands 128 and 130 to memory access commands 132 for writing and reading data in the memory 114. After the memory controller 112 translates the file access commands 128 and 130 to the memory access commands 132, a read or write access is made to the memory 114, as appropriate. Sector write and read commands may be included as memory access commands 132, for example.

An example of the translation of the file access commands 128 and 130 to the memory access commands 132 is translating a read file command for a particular file to a read sector command for a range of physical block addresses. The physical block address may be the physical address of the storage location within the memory 114 where data is written to or read from. For example, data to be written to the memory 114 may be included with a write file command and included with a sector write command. A particular file may be stored in one or more consecutive or non-consecutive sectors. The specific functional requirements of the memory controller 112 may be defined by the type of memory 114 being accessed.

Hardware, firmware, software, or any combination thereof may be utilized to implement the functionality of the memory controller 112. In one embodiment, the memory controller 112 is implemented utilizing a processor within the storage system 104 configured with processor executable instructions. The processor executable instructions may be stored in random access memory (RAM) within the storage system 104, or non-volatile memory, such as a read-only memory (ROM), EEPROM (Electrically Erasable and Programmable Read Only Memory), E-flash (embedded flash), or the memory 114 within the storage system 104.

The host 102 and the storage system 104 may be implemented in hardware, software, or a combination of hardware and software. In one embodiment, the storage system 104 may be a solid-state disk drive, or a magnetic disk drive, sometimes referred to as a hard disk drive. In another embodiment, the storage system 104 may be a non-volatile memory such as a small form factor card. In one embodiment, the host 102 and the storage system 104 are contained within the same physical enclosure, and the storage system 104 is not removable from the system 100. In another embodiment, the storage system 104 is a removable media, such as a small form factor non-volatile memory card, and may be connected to and removed from the system 100.

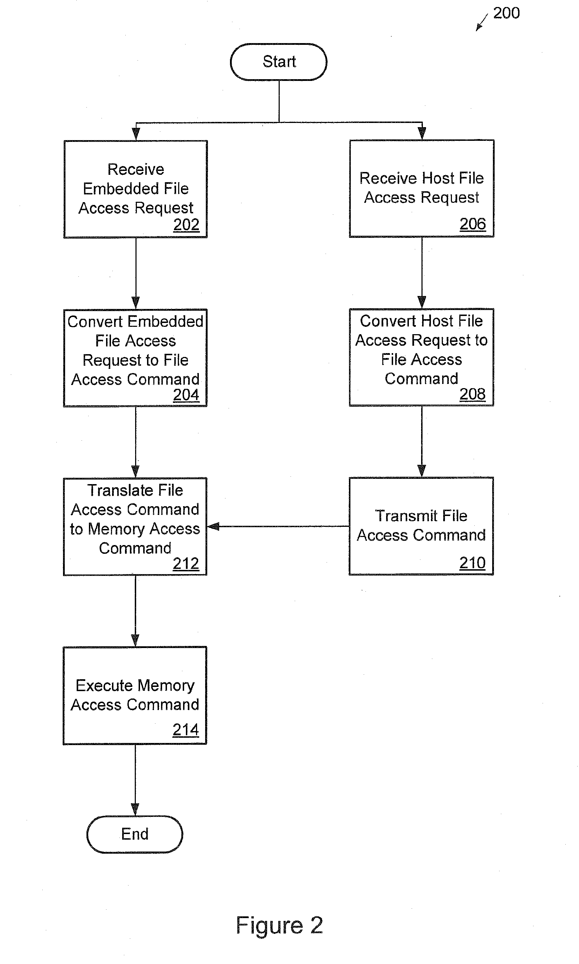

Figure 2 is a flow diagram illustrating a method 200 of managing access to a memory in a storage system. A host and the storage system may each read and write data to the memory in the storage system. In particular, applications executing on the host and applications executing on the storage system may independently send high-level file access requests to access the memory. The file access requests may be converted into file access commands in a file system, then translated into memory access commands in a memory controller on the storage system, for example. By translating high-level file commands at a centralized memory controller, data corruption and collisions may be avoided.

At act 202, an embedded file access request from an application executing on the storage system may be received. The embedded file access request may include function calls to functions supported by the application programming interface (API) of an embedded file system, for example. The embedded file access requests may be converted to file access commands at act 204. The file access commands may include file-level commands, such as open file, write file, and read file.

A host file access request from an application executing on the host may be received at act 206. Similar to the embedded file access request, the host file access request may include function calls to functions supported by the application programming interface (API) of a host file system. The host file access requests may be converted to file access commands at act 208. At act 210, the file access commands may be transmitted from the host and received by the storage system. The file access command may be received via a Universal Serial Bus (USB) interface, or other type of interface. The file access command may be included in a command conforming to a USB Mass Storage Class (MSC) interface. For example, the file access commands may be included as a special cluster in a sector command of the USB MSC interface. Acts 202 and 204 involving the storage system, and acts 206, 208, and 210 involving the host are not mutually exclusive and may occur independently and in parallel, or may occur at separate times.

At act 212, the file access commands received from the host and/or from within the storage system are translated to memory access commands. The memory access commands may include sector write and read commands, for example, to access areas of the memory that are associated with the file specified in the file access commands. The memory access commands generated at act 212 are executed at act 214. If the memory access command is a read sector command, for example, then the particular sectors associated with the file may be accessed and read, and the data contained within the sectors may be returned. As another example, if the memory access command is a write sector command, then the particular sectors associated with the file may be accessed, and the data associated with the write sector command may be written to the sectors. Acts 212 and 214 for translating the file access commands to memory access commands and executing the memory access commands may be performed on the storage system.

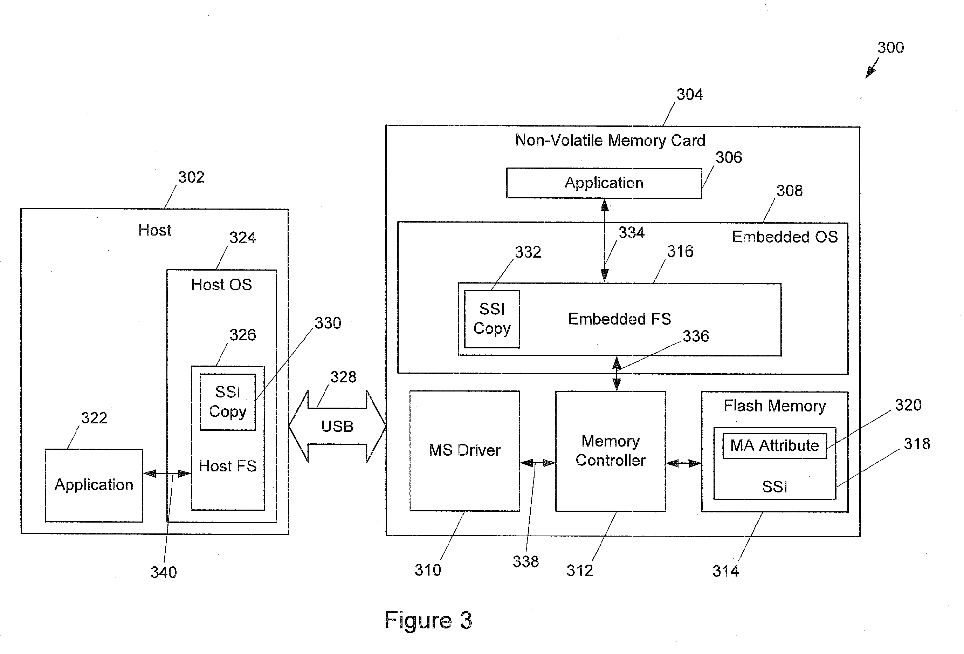

Figure 3 is a block diagram of a second exemplary system 300 including a host 302 in communication with a storage system 304. A flash memory 314 in the storage system 304 may be accessed by embedded applications 306 executing on the storage system 304 or host applications 322 executing on the host 302. A host file system 326 and an embedded file system 316 may each read and write data to the memory 314 in the storage system 304. For example, the host file system 326 may write and read its own data, and the embedded file system 316 may also write and read its own data. The memory 314 may also store shared data that may be accessed by both the host file system 326 and the embedded file system 316. For example, the host file system 326 may write data that is readable by the embedded file system 316, and the embedded file system 316 may also overwrite and modify that data. Similarly, the embedded file system 316 may write data that is readable by the host file system 326, and the host file system 326 may also overwrite and modify the data.

The storage system 304 may include one or a plurality of embedded applications 306 executing on the storage system 304, an embedded operating system 308, a memory system driver 310, a memory controller 312, and the flash memory 314. The flash memory 314 includes data that is stored in the storage system 304. The flash memory 314 may be organized by a storage system index (SSI) 318. In one embodiment, the volume file system used by the memory 314 is a FAT12, FAT16, or FAT32 system, and the SSI 318 includes a file allocation table (FAT). The SSI 318 acts as an index for the data stored in the storage system 304. The SSI 318 also includes additional information required to operate and maintain the storage system 304. This information may be stored outside of the FAT, and includes information such as directory information, file sizes, file creation and update dates, file and directory names, and file and directory attributes. Other embodiments may utilize other volume file system formats and their corresponding storage system indices.

The SSI 318 may include a multiple access attribute 320 readable by the host 302 and the storage system 304. The multiple access attribute 320 may include a lock flag that indicates that the memory 314 is going to be modified or is being modified by either the host 302 or the storage system 304. The lock flag may indicate that a portion of the memory 314 is locked. The portion of the memory 314 that may be locked may be one or more files, one or more directories, or the entire memory. When a portion of the memory 314 is locked by either the host 302 or the storage system 304, the other of the host 302 or the storage system 304 may not access or modify that portion of the memory 314. In this way, data in the memory 314 will not be simultaneously accessed or modified by the host 302 and the storage system 304, and the integrity of the data will be maintained.

Information in the SSI 318 is utilized to map file-level read or write operations to memory read or write operations. When data is written to the memory 314, the SSI 318 may be updated with the location of the new data. Writing a new file, erasing a file, appending data to an existing file, or overwriting an existing file with a new, larger file, are all examples of file write operations that may update the SSI 318. In contrast, the SSI 318 does not need to be updated after a read operation because the location of the stored data is unchanged. Similarly, if a storage system supports overwriting data with new data, referred to as "write in place," the SSI 318 does not need to be updated if a file is overwritten with a file of the same size, because the location of the stored data is unchanged.

The embedded operating system 308 includes an embedded file system 316. The applications 306 may write and read data in the memory 314 by sending a file access request 334 to the embedded file system 316. The file access requests 334 may be in the form of function calls to functions supported by the application programming interface (API) of the embedded file system 316, for example. The embedded file system 316 may determine whether the lock flag in the multiple access attribute 320 is set for the portions of the memory 314 corresponding to the embedded file access request 334. For example, the embedded file system 316 may direct the memory controller 312 to access the portions of the memory 314 corresponding to the embedded file access request 334. The memory controller 312 may first retrieve the lock flag in the multiple access attribute 320 for the corresponding portion of the memory 314 and return the lock flag to the embedded file system 316. If the lock flag is set for the corresponding portion of the memory 314, then the embedded file access request 334 from the embedded application 306 is prevented from executing.

However, if the lock flag is not set for the corresponding portion of the memory 314, then the lock flag may be set for the corresponding portion of the memory 314, and the embedded file system 316 converts the embedded file access request 334 to a memory access command 336. Memory access commands 336 may include sector write and read commands. The embedded file system 316 may set the lock flag in the multiple access attribute 320 by sending an appropriate command to the memory controller 312. The memory controller 312 may execute the memory access command 336 to write and read data in the memory 314. Following execution of the memory access command 336, the lock flag for the portion of memory corresponding to the embedded file access request 334 may be cleared.

Similarly, the host 302 may include one or a plurality of host applications 322 executing on the host 302, and a host operating system 324. A host file system 326 included in the host operating system 324 may receive file access requests 340 from the host applications 322. The host applications 322 may write and read data to the memory 314 through the file access requests 340. The file access requests 340 may be in the form of function calls to functions supported by the application programming interface (API) of the host file system 326. The host file system 326 may determine whether the lock flag in the multiple access attributes 320 is set for the portions of the memory 314 corresponding to the host file access request 340. For example, the host file system 326 may send an inquiry to the memory controller 312 to determine a status of the lock flag for the portions of the memory 314 corresponding to the host file access request 340. The memory controller 312 may retrieve the lock flag in the multiple access attribute 320 for the corresponding portion of the memory 314 and return the lock flag to the host file system 326.

If the lock flag is set for the corresponding portion of the memory 314, then the host file access request 340 from the host application 322 is prevented from executing. However, if the lock flag is not set for the corresponding portion of the memory 314, then the lock flag may be set for the corresponding portion of the memory 314, and the host file system 316 converts the host file access request 340 to a memory access command 338. The storage system 304 may receive the memory access command 338 from the host. A Universal Serial Bus (USB) interface 328 may be used to transmit the memory access command 338 from the host file system 326 to the memory system driver 310 on the storage system 304. Other types of interfaces between the host 302 and the storage system 304 may also be used. The USB interface 328 may include a USB Mass Storage Class (MSC) interface for communicating the memory access commands 338 between the host 302 and the storage system 304.

The memory controller 312 may receive the memory access commands 336 and 338 from the embedded file system 316 and the memory system driver 310. As described previously, the memory access commands 338 from the memory system driver 310 may originate from host applications 322 via the host file system 326 and USB interface 328. The memory controller 312 may execute the received memory access commands 336 and 338 for writing and reading data in the memory 314. A read or write access may be made to the memory 314, as appropriate. Following execution of the memory access command 336 and 338, the memory controller 312 may clear the lock flag for the portions of the memory 314 corresponding to the embedded file access requests 334 and the host file access requests 340.

Hardware, firmware, software, or any combination thereof may be utilized to implement the functionality of the memory controller 312. In one embodiment, the memory controller 312 is implemented utilizing a processor within the storage system 304 configured with processor executable instructions. The processor executable instructions may be stored in random access memory (RAM) within the storage system 304, or non-volatile memory, such as a read-only memory (ROM), EEPROM (Electrically Erasable and Programmable Read Only Memory), E-flash (embedded flash), or the memory 314 within the storage system 304.

In order to improve the performance of the system 300, a file system may store copies 330 and 332 of the storage system index 318. When a file system performs a write operation, its copy of the SSI 318 is updated. For example, if a write operation using the host file system 326 updates the host SSI copy 330, then the embedded SSI copy 332 in the embedded file system 316 is obsolete. If the embedded SSI copy 332 is not updated, a subsequent write operation using the embedded file system 316 may corrupt the contents of the storage system 304. Similarly, if a write operation using the embedded file system 316 updates the embedded SSI copy 332, the host SSI copy 330 in the host file system 326 is obsolete. If the host SSI copy 330 is not updated, a subsequent write operation using the host file system 326 may corrupt the contents of the storage system 304. Therefore, synchronization of the SSI copies 330 and 332 is important to prevent corruption of the storage system 304.

To assist with synchronization of the SSI copies 330 and 332, the multiple access attributes 320 may include a host modification flag and an embedded modification flag in the copies 330 and 332, respectively. The host modification flag in the host SSI copy 330 may be set after the host SSI copy 330 has been modified by the host file system 326. Similarly, the embedded modification flag in the embedded SSI copy 332 may be set after the embedded SSI copy 332 has been modified by the embedded file system 316.

Alternatively, the SSI 318 may include the host modification flag and the embedded modification flag. Performance of the storage system 304 may be improved if the modification flags are stored in the SSI 318. The host modification flag in the SSI 318 may be set after the host SSI copy 330 has been modified by the host file system 326. Similarly, the embedded modification flag in the SSI 318 may be set after the embedded SSI copy 332 has been modified by the embedded file system 316.

After receiving an embedded file access request 334 from an embedded application 306, the embedded file system 316 may transmit a query to the host 302 to determine a status of the host modification flag in the host SSI copy 330. The embedded file system 316 may alternatively query the SSI 318 to determine the status of the host modification flag in the SSI 318. If the host modification flag is set, then the embedded SSI copy 332 is synchronized with the host SSI copy 330. The host modification flag is cleared and the host SSI copy 330 may then be copied to the embedded SSI copy 332 and to the storage system index 314, such that the storage system index 314, host SSI copy 330, and embedded SSI copy 332 all contain the same information. After synchronization of the SSI copies or if the host modification flag is not set, then the embedded file system 316 may convert the embedded file access request 334 to an embedded memory access command 336 and execute the embedded memory access command 336, as described above. If the embedded memory access command 336 writes data to the memory 314 that updates the embedded SSI copy 332, then the embedded modification flag may be set. The embedded SSI copy 332 may be updated when a size of a file associated with the embedded file access request 334 increases.

The storage system 304 may also receive an inquiry from the host 302 to determine a status of the embedded modification flag in the embedded SSI copy 332. The embedded modification flag may alternatively be included in the SSI 318. The inquiry may occur after the host file system 326 receives a host file access request 340 from a host application 322. After receiving the inquiry from the host 302, the memory controller 312 may determine the status of the embedded modification flag and transmit the status to the host 302. If the embedded modification flag is set, then the host SSI copy 330 is synchronized with the embedded SSI copy 332. The embedded modification flag is cleared and the embedded SSI copy 332 may then be copied to the host SSI copy 330 and to the storage system index 314, such that the storage system index 314, host SSI copy 330, and embedded SSI copy 332 all contain the same information. After synchronization of the SSI copies or if the embedded modification flag is not set, then the storage system 304 may receive a host memory access command 338 from the host 302, and execute the host memory access command 338, as described above. If the host memory access command 338 writes data to the memory 314 that updates the host SSI copy 330, then the host modification flag may be set. The host SSI copy 330 may be updated when a size of a file associated with the host file access request 340 increases.

The host 302 and the storage system 304 may be implemented in hardware, software, or a combination of hardware and software. In one embodiment, the storage system 304 may be a solid-state disk drive, or a magnetic disk drive, sometimes referred to as a hard disk drive. In another embodiment, the storage system 304 may be a non-volatile memory such as a small form factor card. In one embodiment, the host 302 and the storage system 304 are contained within the same physical enclosure, and the storage system 304 is not removable from the system 300. In another embodiment, the storage system 304 is a removable media, such as a small form factor non-volatile memory card, and may be connected to and removed from the system 300.

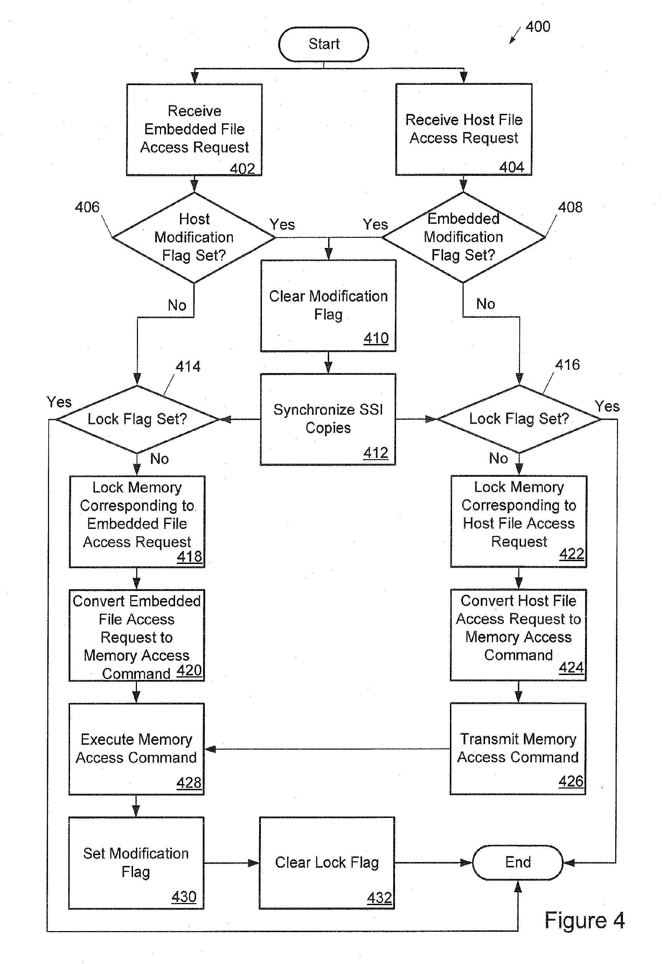

Figure 4 is a flow diagram illustrating a method 400 of managing access to a memory indexed by a storage system index in a storage system. A host and the storage system may each read and write data to the memory in the storage system. Applications executing on the host and applications executing on the storage system may independently send file access requests to access the memory. The memory may be organized by a storage system index (SSI), such as a file allocation table (FAT). The SSI acts as an index for the data stored in the storage system. The SSI may also include additional information required to operate and maintain the storage system.

To improve performance, the host and the storage system may store copies of the SSI. When either the host or the storage system performs a write operation, its copy of the SSI may be updated. For example, if a write operation using the host updates the host SSI copy, then the embedded SSI copy in the storage system is obsolete. If the embedded SSI copy is not updated, a subsequent write operation using the storage system may corrupt the contents of the memory. Therefore, synchronization of the copies of the SSI is important to prevent corruption of the memory.

Information in the SSI is utilized to map file-level read or write operations to memory read or write operations. When data is written to the memory, the SSI may be updated with the location of the new data. Writing a new file, erasing a file, appending data to an existing file, or overwriting an existing file with a new, larger file, are all examples of file write operations that may update the SSI. In contrast, the SSI does not need to be updated after a read operation, because the location of the stored data is unchanged. Similarly, if a storage system supports overwriting data with new data, referred to as "write in place," the SSI does not need to be updated if a file is overwritten with a file of the same size, because the location of the stored data is unchanged.

At act 402, an embedded file access request from an application executing on the storage system may be received. At act 404, a host file access request from an application executing on the host may be received. The embedded file access request and the host file access request may include function calls to functions supported by the application programming interface (API) of an embedded file system and a host file system, respectively. Acts 402 and 404 may occur independently and in parallel, or may occur at separate times.

After receiving an embedded file access request at act 402, it may be determined whether a host modification flag has been set at act 406. The host modification flag may be included in the SSI or the host SSI copy. Similarly, it may be determined whether an embedded modification flag has been set at act 408, after receiving a host file access request at act 404. The embedded modification flag may be included in the SSI or the embedded SSI copy. The modification flag may have been previously set if the particular copy of the SSI had been modified. For example, the embedded SSI copy may have been modified following a write operation by the storage system, and the host SSI copy may have been modified following a write operation by the host.

If the modification flag is determined as set at acts 406 and/or 408, then the method 400 continues to act 410. The modification flag for the host and/or the storage system that had been set may be cleared at act 410. Following act 410, the host SSI copy and embedded SSI copy may be synchronized at act 412. Synchronization of the SSI copies may include copying the modified SSI copy to the SSI and to the SSI copy that needs to be updated. Following act 412, the method 400 may continue to act 414 if the host modification flag had been found as set at act 406 and/or to act 416 if the embedded modification flag had been found as set at act 408.

If the modification flag is determined as not set at act 406 and/or act 408, then the method 400 continues to act 414 or act 416, respectively. At act 414, it may be determined whether a lock flag in the SSI has been set for the portion of the memory corresponding to the embedded file access request received at act 402. Similarly, at act 416, it may be determined whether a lock flag in the SSI has been set for the portion of the memory corresponding to the host file access request received at act 404. Act 416 may include transmitting an inquiry from the host to the storage system to determine the status of the lock flag the portion of the memory corresponding to the host file access request received at act 404. The storage system may retrieve and transmit the status of the lock flag to the host.

The lock flag in the SSI may indicate that a portion of the memory is locked, for example, that the portion of the memory is going to be modified or is being modified by another file system. The portion of the memory that may be locked may be one or more files, one or more directories, or the entire memory. When a portion of the memory is locked by either the host or the storage system, the other of the host or the storage system may not access or modify that portion of the memory. In this way, data in the memory will not be simultaneously accessed by the host and the storage system, and the integrity of the data is maintained.

If the lock flag is determined as set at act 414 or act 416 corresponding to an embedded file access request or a host file access request, respectively, then the method 400 is complete and the file access request is prevented from executing. If the lock flag is determined as not set at act 414 for the storage system, then the method 400 continues to act 418. At act 418, the portion of the memory corresponding to the embedded file access request received at act 402 is locked. The portion of the memory may be locked by setting a lock flag in the SSI for that portion, for example. At act 420, the embedded file access request may be converted to a memory access command. The memory access command may include sector write and read commands that correspond to the memory locations of the specified file in the embedded file access request. The memory access command may be executed at act 428. If the SSI has been modified due to the memory access command, then the modification flag for the embedded SSI copy may be set at act 430. The embedded SSI copy may be modified, for example, when the executed memory access command results in an increased file size for the file associated with the embedded file access request. The lock flag that was set at act 418 for the portion of the memory corresponding to the embedded file access request may be cleared at act 432.

Similarly, if the lock flag is determined as not set at act 416 for the host, then the method 400 continues to act 422. At act 422, the portion of the memory corresponding to the host file access request received at act 404 is locked. At act 424, the host file access request may be converted to a memory access command. The memory access command may include sector write and read commands that correspond to the memory locations of the specified file in the host file access request. At act 426, the memory access command from act 424 may be transmitted to the storage system. A Universal Serial Bus (USB) interface may be used to transmit the memory access commands from the host to the storage system. The USB interface may include a USB Mass Storage Class (MSC) interface for communicating the memory access commands. The memory access command transmitted to the storage system may be executed at act 428. If the SSI has been modified due to the memory access command increasing a size of a file associated with the host file access request, then the modification flag for the host SSI copy may be set at act 430. The lock flag that was set at act 418 for the portion of the memory corresponding to the host file access request may be cleared at act 432.

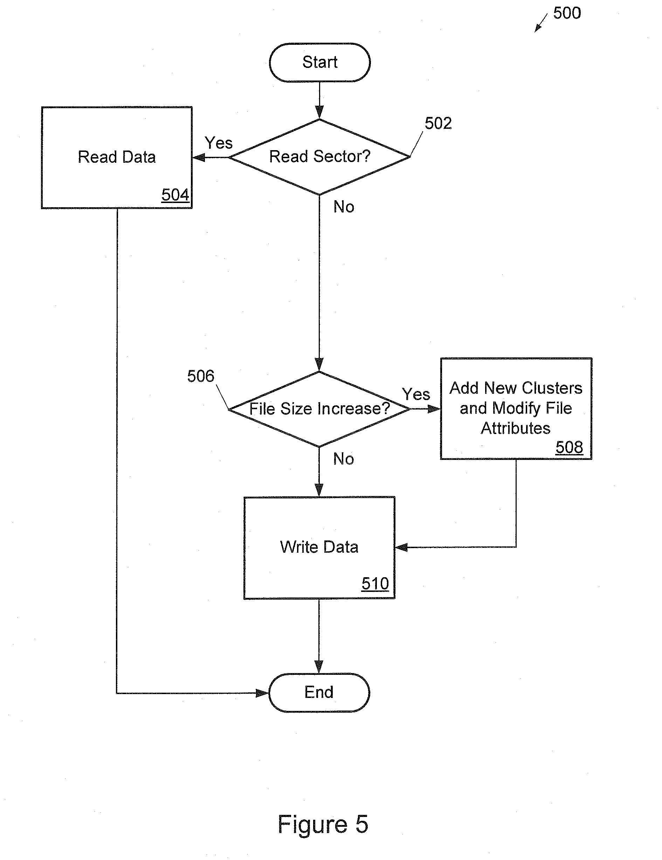

Figure 5 is a flow diagram illustrating a method 500 of executing memory access commands. The method 500 may be included in act 428 described in Figure 4. For example, a memory access command executed with the method 500 may include a read sector command, a write sector command, or other memory-level commands. At act 502, if the memory access command is a read sector command, the method 500 continues to act 504 where the desired data is read and returned, and the method 500 is complete. If the memory access command is not a read sector command at act 502, the memory access command may be a write sector command and the method 500 continues to act 506.

The write sector command may be the result of a converted file-level write file command, for example. The write file command may be associated with a file in the storage system and may be indexed by a SSI such as a File Allocation Table (FAT). If the write sector command does not increase the size of an existing file corresponding to the write file command at act 506, then the data accompanying the write sector command is written at act 510, and the method 500 is complete. However, at act 506, if the write sector command increases the size of the existing file corresponding to the write file command, then the method 500 continues to act 508. The write sector command may increase the size of an existing file corresponding to the write file command if data is appended to an existing file or an existing file is overwritten with a new, larger file. At act 508, new clusters which constitute the larger file may be added to the end of the existing file. In addition, the file attributes of the FAT may be updated to reflect the larger size file. In one embodiment, only the locked portion of the FAT that may have been locked at act 418 or act 422, for example, is updated to reflect the larger size file. At act 510, the data accompanying the write sector command is written.

Although the invention has been described with respect to various system and method embodiments, it will be understood that the invention is entitled to protection within the full scope of the appended claims, and the claims are not limited to the embodiments and features described herein.

## Claims

1. A method for managing memory access, comprising:
converting an embedded file access request from within a storage system to an embedded file access command;
receiving a host file access command from a host; and
translating the embedded file access command and the host file access command to memory access commands for writing and reading data to and from a memory.

2. The method of claim 1, wherein the embedded file access command and the host file access command comprise at least one of a file open command, a file read command, or a file write command.

3. The method of claim 1, further comprising receiving the embedded file access request from an embedded application executing on the storage system.

4. The method of claim 1, wherein receiving the host file access command from the host comprises receiving the host file access command over a Universal Serial Bus interface.

5. The method of claim 1, wherein receiving the host file access command from the host comprises receiving the host file access command in a command conforming to a Universal Serial Bus Mass Storage Class interface.

6. The method of claim 1, further comprising executing the memory access commands, and wherein the translating and executing steps are performed on the storage system.

7. The method of claim 1, wherein the data is in a common file.

8. A method for managing memory access, comprising:
receiving an embedded file access request from within a storage system;
determining whether a lock flag is set for a portion of a memory corresponding to the embedded file access request, wherein the lock flag is included in a storage system index and is set only when the portion of the memory is locked, the memory indexed by the storage system index;
if the lock flag is not set for the portion of the memory corresponding to the embedded file access request:
setting the lock flag for the portion of the memory corresponding to the embedded file access request;
converting the embedded file access request to an embedded memory access command;
executing the embedded memory access command to write and read data in the memory; and
clearing the lock flag for the portion of the memory corresponding to the embedded file access request; and
if the lock flag is set for the portion of the memory corresponding to the embedded file access request, preventing the embedded file access request from executing.

9. The method of claim 8, wherein the embedded file access request is received from an embedded application executing on the storage system.

10. The method of claim 8, wherein the portion of the memory that is locked comprises data corresponding to one or more of a file, a directory, or all of the memory.

11. The method of claim 8, further comprising:
receiving an inquiry from a host to determine a status of the lock flag for the portion of the memory corresponding to a host file access request;
transmitting to the host the status of the lock flag for the portion of the memory corresponding to the host file access request;
if the lock flag is not set for the portion of the memory corresponding to the host file access request:
receiving a host memory access command that is based on the host file access request;
setting the lock flag for the portion of the memory corresponding to the host file access request;
executing the host memory access command to write and read data in the memory; and
clearing the lock flag for the portion of the memory corresponding to the host file access request; and
if the lock flag is set for the portion of the memory corresponding to the host file access request, preventing the host file access request from executing.

12. A method for managing memory access, comprising:
receiving an embedded file access request from within a storage system;
transmitting a query to determine a status of a host modification flag, wherein the host modification flag is set to indicate that a host copy of a storage system index has been modified, the host copy stored on a host and wherein the storage system index indexes a memory;
receiving the status of the host modification flag; and
if the host modification flag is set:
clearing the host modification flag;
copying the host copy to an embedded copy of the storage system index, wherein the embedded copy is stored on the storage system; and
copying the host copy to the storage system index.

13. The method of claim 12, wherein the host modification flag is included in the host copy of the storage system index and transmitting the query comprises transmitting the query to the host.

14. The method of claim 12, wherein the host modification flag is included in the storage system index and transmitting the query comprises transmitting the query to the storage system index.

15. The method of claim 12, further comprising:
converting the embedded file access request to an embedded memory access command;
executing the embedded memory access command; and
if the embedded memory access command comprises writing data that increases a size of a file associated with the embedded file access request:
updating the embedded copy with the increased size of the file associated with the embedded file access request; and
setting an embedded modification flag, the embedded modification flag set to indicate the embedded copy has been modified.

16. The method of claim 12, further comprising:
receiving an inquiry from a host to determine a status of an embedded modification flag, wherein the embedded modification flag is set to indicate the embedded copy has been modified; and
transmitting to the host the status of the embedded modification flag.

17. The method of claim 16, wherein the embedded modification flag is included in the embedded copy.

18. The method of claim 16, wherein the embedded modification flag is included in the storage system index.

19. The method of claim 16, further comprising:
if the embedded modification flag is set:
clearing the embedded modification flag;
copying the embedded copy to the host copy; and
copying the embedded copy to the storage system index.

20. The method of claim 19, further comprising:
receiving a host memory access command;
executing the host memory access command; and
if the host memory access command comprises writing data that increases a size of a file associated with a host file access request:
updating the host copy with the increased size of the file associated with the host file access request; and
setting the host modification flag.
